(19) Europäisches Patentamt

European Patent Office

Office européen des brevets

(11) **EP 2 376 544 B1**

(12) **FASCICULE DE BREVET EUROPEEN**

(45) Date de publication et mention de la délivrance du brevet:
**14.08.2013 Bulletin 2013/33**

(21) Numéro de dépôt: **09799022.0**

(22) Date de dépôt: **10.12.2009**

(51) Int Cl.:
**C08C 19/44** (2006.01)          **C08F 36/04** (2006.01)
**C08F 36/06** (2006.01)          **C08F 4/54** (2006.01)

(86) Numéro de dépôt international:
**PCT/EP2009/008838**

(87) Numéro de publication internationale:
**WO 2010/069511 (24.06.2010 Gazette 2010/25)**

(54) **PROCEDE DE PREPARATION D'UN ELASTOMERE DIENIQUE FONCTIONNALISE, TEL QU'UN POLYBUTADIENE**

VERFAHREN ZUR HERSTELLUNG EINES FUNKTIONALISIERTEN DIENELASTOMERS WIE POLYBUTADIEN

METHOD FOR PREPARING A FUNCTIONALISED DIENE ELASTOMER SUCH AS POLYBUTADIENE

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **15.12.2008 FR 0858578**

(43) Date de publication de la demande:
**19.10.2011 Bulletin 2011/42**

(73) Titulaires:
• **COMPAGNIE GENERALE DES ETABLISSEMENTS MICHELIN**
  **63000 Clermont-Ferrand (FR)**
• **MICHELIN Recherche et Technique S.A.**
  **1763 Granges-Paccot (CH)**

(72) Inventeurs:
• **ROBERT, Pierre**
  **63040 Clermont-Ferrand Cedex 9 (FR)**
• **THUILLIEZ, Julien**
  **F-63100 Clermont-Ferrand (FR)**

(74) Mandataire: **Le Cam, Véronique Marie Christine**
**Manufacture Française des Pneumatiques Michelin**
**23 Place des Carmes-Déchaux**
**SGD/LG/PI - F35 - Ladoux**
**63040 Clermont-Ferrand Cedex (FR)**

(56) Documents cités:
**EP-A1- 1 845 118          EP-A2- 2 075 267**

**Description**

La présente invention concerne un procédé de préparation d'un élastomère diénique fonctionnalisé, tel qu'un homopolymère ou un copolymère du butadiène. L'invention s'applique notamment à l'obtention d'un polybutadiène fonctionnalisé à taux élevé d'enchaînements cis-1,4 présentant à la fois une viscosité Mooney égale ou supérieure à 40 et un indice de polydispersité réduit.

Pour la préparation d'homopolymères ou de copolymères du butadiène présentant un taux élevé d'enchaînements cis-1,4, il est connu d'utiliser des systèmes catalytiques à base :

- d'un sel de terre rare en solution dans un solvant hydrocarboné,
- d'un agent d'alkylation de ce sel constitué d'un alkylaluminium, et
- d'un halogénure d'un alkylaluminium.

Les documents de brevet WO-A-02/38636 et WO-A-03/097708 au nom des Demanderesses enseignent, pour l'obtention de polybutadiènes, d'utiliser un système catalytique de type « préformé » à base d'au moins :

- un diène conjugué de préformation, tel que le butadiène,
- un sel d'un ou de plusieurs métaux de terre rare d'un acide phosphorique organique, qui est en suspension dans au moins un solvant hydrocarboné inerte, saturé et de type aliphatique ou alicyclique,
- un agent d'alkylation constitué d'un alkylaluminium de formule $AlR_3$ ou $HAlR_2$, et
- un donneur d'halogène qui appartient à la famille des halogénures d'alkylaluminium à l'exclusion des sesquihalogénures d'alkylaluminium.

Les polybutadiènes obtenus au moyen de ce système catalytique présentent notamment un indice de polydispersité inférieur à 2,1 et une viscosité Mooney ML(1+4) à 100° C égale ou supérieure à 40. Ces caractéristiques combinées rendent ces polybutadiènes bien adaptés pour être utilisés dans des bandes de roulement d'enveloppe de pneumatique.

Le document de brevet EP-A1-919573 de la société ENICHEM enseigne, pour l'obtention d'un homopolymère ou d'un copolymère du butadiène, d'initier la réaction de polymérisation avec un système catalytique comprenant :

a) un composé lanthanide de formule $LnX_3$ où X est choisi parmi les halogénures, alcoolates, carboxylates, $-N(R_x)$ (Ry), où $R_x$ et Ry sont des radicaux alcoyles C1 - C5, et Ln est préférentiellement le néodyme, et soit :

i) un composé de formule Li(A),
ii) un composé de formule $LiLn(A)_4$,

dans lesquels A est un radical allylique de formule : $R_1R_2C-CR_3-CR_4R_5$ et $R_1,R_2,R_3,R_4,R_5$ sont choisis parmi H ou un radical $C_1 - C_{10}$,
b) un co-catalyseur constitué, entre autres, d'un alkylaluminium de formule $AlX_sR_{3-s}$ dans laquelle s est zéro ou un nombre entier égal à 1 ou 2,
ces constituants pouvant être mis à réagir dans un solvant hydrocarboné séparément ou entre eux, en présence ou non du monomère à polymériser, dans le réacteur de polymérisation ou en-dehors de celui-ci, les composés lanthanides étant préférentiellement utilisés en solution dans des solvants tels que du THF et des éthers aliphatiques seuls ou en mélange avec des solvants hydrocarbonés.

Les polybutadiènes obtenus au moyen de ce système catalytique présentent un taux d'enchaînements cis-1,4 supérieur à 95% et, soit un indice de polydispersité élevé égal à 2,7 et une Mw égale à 268 000g/mol, ce qui rend ces polybutadiènes peu adaptés à être utilisés dans des bandes de roulement d'enveloppe du pneumatique présentant un faible niveau d'hystérèse, soit un indice de polydispersité compris entre 1,7 et 1,8 et une Mw très élevée comprise entre 463 000 g/mol et 922 000 g/mol, ce qui rend problématique leur mise en oeuvre et leur mélangeage. Par ailleurs, l'invention est essentiellement illustrée par des systèmes catalytiques à base de méthyl alumino-oxane (« MAO » en abrégé), constituant coûteux. -

Le document de brevet EP-A1-1.845.118 au nom des Demanderesses enseigne, pour l'obtention d'un élastomère diénique présentant un taux d'enchaînements cis-1,4 supérieur à 90 % et un indice de polydispersité égal ou inférieur à 2,1, tel qu'un homopolymère ou un copolymère du butadiène d'utiliser un système catalytique avec au moins un monomère diène conjugué à polymériser, caractérisé en ce que ledit système catalytique est à base d'au moins :

- optionnellement un diène conjugué de préformation,

- un sel d'un ou plusieurs métaux de terre(s) rare(s), tel qu'un sel d'un acide carboxylique ou d'un acide phosphorique organique,
- un solvant hydrocarboné inerte,
- un agent d'alkylation comprenant un dérivé allylique de l'aluminium de formule $R''_nAlR'_{3-n}$, où R' est un groupe alcoyle saturé ou non ou bien un hydrure, où R'' est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.

Bien que les élastomères diéniques obtenus selon le procédé divulgué dans le document de brevet EP-A1-1.845.118 soient bien adaptés pour la fabrication de bandes de roulement d'enveloppes de pneumatiques, depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement toujours plus réduite. Pour atteindre un tel objectif, il a été proposé de modifier la structure des polymères et des copolymères diéniques en fin de polymérisation au moyen d'agents de fonctionnalisation, d'agents de couplage ou d'agents d'étoilage.

La très grande majorité de ces solutions s'est d'abord concentrée sur l'utilisation de polymères fonctionnalisés qui sont actifs vis-à-vis du noir de carbone, dans le but d'obtenir une bonne interaction entre le polymère ainsi modifié et le noir de carbone.

A titre d'illustration de cet art antérieur relatif à l'interaction avec du noir de carbone, on peut par exemple citer la fonctionnalisation d'élastomères diéniques par la 4,4'-bis (diéthylamino)benzophénone (« DEAB » en abrégé), la N-méthyl pyrolidone ou des dérivés halogénés de l'étain de formule $R_{4-x}SnCl_x$, où R est un groupe alcoyle et x varie de 1 à 4.

On s'est également intéressé à l'utilisation de polymères fonctionnalisés actifs vis-à-vis de la silice, dans le but d'obtenir une bonne interaction de ces polymères avec la silice.

A titre d'exemples, on peut citer la fonctionnalisation par le glycidyloxypropyltriméthoxysilane (« GLYMO » en abrégé ci-après), le glycidyloxypropylméthyldiéthoxysilane, le glycidyloxypropyldiméthméthoxysilane, l'isocyanatopropyltriéthoxysilane, ou par des agents tels que ceux décrits dans le document de brevet FR-A-2 740 778, qui divulgue l'incorporation à des compositions de caoutchouc comprenant à titre de charge renforçante de la silice à titre majoritaire, de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

On a pu établir que ces polymères confèrent des propriétés de caoutchouterie, notamment hystérétiques et de renforcement à l'état réticulé, qui sont améliorées par rapport à celles de compositions témoin à base de polymères diéniques non fonctionnels, et qui sont au moins analogues à celles de compositions à base de polymères diéniques à fonction alcoxysilane.

Parmi les autres réactions de fonctionnalisation étudiées, on peut notamment citer, à titre non limitatif, la fonctionnalisation le long de la chaîne d'élastomères diéniques par des fonctions COOH. Cette fonctionnalisation peut être avantageusement mise en oeuvre par le procédé décrit dans le document EP-B-1 050 545 au nom des Demanderesses, qui consiste essentiellement :

- dans une première étape, à soumettre dans un solvant hydrocarboné inerte un élastomère à une réaction d'hydroalumination ou de carboalumination le long de sa chaîne par addition d'un agent dérivé de l'aluminium (tel qu'un alkyl aluminium ou un aluminate) à cet élastomère,
- dans une seconde étape, à ajouter au produit de cette réaction au moins un agent électrophile prévu pour réagir avec ledit agent dérivé de l'aluminium, tel qu'un anhydride cyclique ou non (e.g. l'anhydride succinique ou le dioxyde de carbone), puis
- dans une troisième étape, à stopper ultérieurement la réaction de fonctionnalisation de la seconde étape et à récupérer le polymère fonctionnalisé le long de sa chaîne.

Dans le cadre de recherches ayant pour but d'adapter les procédés de polymérisation aux élastomères fonctionnalisés à obtenir et aux conditions de polymérisation rencontrées, il a été découvert d'une manière inattendue que si l'on incorpore au moins une base de Lewis au système catalytique spécifique à base d'au moins :

- optionnellement un diène conjugué de préformation,

- un sel d'un ou plusieurs métaux de terre rare, tel qu'un sel d'un acide carboxylique ou d'un acide phosphorique organique,
- un solvant hydrocarboné inerte,
- un agent d'alkylation spécifique constitué par le produit venant du mélange et de la réaction d'un dérivé allylique du lithium avec un dérivé halogénure de dialkylaluminium, ledit agent étant un dérivé allylique de l'aluminium répondant à la formule $R''_n AlR'_{3-n}$, où R' est un groupe alcoyle saturé ou non ou bien un hydrure, où R'' est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.:

(i) soit lors de sa synthèse (i.e. antérieurement à la réaction des constituants du système catalytique avec le (s) monomère(s) à polymériser),
(ii) soit au milieu de polymérisation comprenant ledit système catalytique et le(s)dit(s) monomère(s) à polymériser (i.e. lors de la réaction), puis qu'on ajoute un agent de fonctionnalisation au polymère issu de la réaction,

on obtient des élastomères diéniques fonctionnalisés à fort taux d'enchaînements cis-1,4, tels que des homo- ou copolymères du butadiène, qui présentent notamment une viscosité Mooney ML(1+4) à 100° C prédéterminée égale ou supérieure à 40 et un indice de polydispersité Ip inférieur à 2,5 ayant de bonnes propriétés mécaniques et des propriétés d'hystérèse améliorée.

Les travaux des Demanderesses ont permis de trouver de manière surprenante que la combinaison d'au moins une base de Lewis choisie dans le groupe constitué par un éther et un composé aminé, audit système catalytique permet d'augmenter le taux de fonctionnalisation d'un élastomère diénique en raison du fait que la base de Lewis inhibe de manière satisfaisante la réaction de couplage en cours de polymérisation dudit dérivé allylique de l'aluminium, c'est-à-dire inhibe partiellement la réaction de couplage et qu'elle permet en outre d'une part de réaliser une fonctionnalisation uniforme sur toute la distribution c'est-à-dire d'obtenir un polymère dont la distribution des masses moléculaires est contrôlée, et d'autre part de réduire très significativement voire supprimer la traînée des bas poids moléculaires du polymère diénique.

Au cours des travaux des Demanderesses, il a été observé que l'ajout d'au moins une base de Lewis dans le milieu réactionnel, que ce soit lors de la préparation du catalyseur par mélange des différents constituants ou lors de la réaction de polymérisation ou à la fois lors de la préparation du catalyseur et lors de la réaction de polymérisation, peut réduire l'activité du système catalytique. Un rapport adéquat base de Lewis par rapport au sel de métal de terre rare permet de régler et d'obtenir à la fois une bonne activité catalytique et un taux de fonctionnalisation élevé. Il a été trouvé que le compromis optimum est différent selon que la base de Lewis est ajoutée au milieu réactionnel lors la préparation du catalyseur par mélange des différents constituants ou au milieu de polymérisation. Dans le premier cas, le rapport base de Lewis/sel de terre rare va préférentiellement inclusivement de 2 à 8, plus préférentiellement de 4 à 6 et encore plus préférentiellement est égal à 4. Dans le second cas, le rapport base de Lewis/sel de terre rare va préférentiellement inclusivement de 2 à 8, plus préférentiellement de 4 à 6 et encore plus préférentiellement est égal à 6. Dans le troisième cas, le rapport base de Lewis/sel de terre rare total, c'est-à-dire introduit à la fois lors de la préparation du catalyseur et lors de la réaction de polymérisation, va préférentiellement inclusivement de 2 à 8, plus préférentiellement de 4 à 6.

On notera également que les caractéristiques combinées de fort taux d'enchaînements *cis-1,4,* de viscosité Mooney suffisamment élevée et de distribution de masse moléculaire contrôlée (se traduisant par un indice Ip réduit) rendent les élastomères diéniques ainsi obtenus particulièrement bien adaptés pour être utilisés dans la fabrication de divers produits semi-finis entrant dans la composition d'enveloppes de pneumatique, notamment des bandes de roulement d'enveloppe de pneumatique.

Bien entendu, par l'expression « à base de » utilisée pour définir les constituants du système catalytique, on entend le mélange préformé de ces constituants incluant alors à titre optionnel ce diène conjugué de préformation, ou le produit de la réaction *in situ* de ces constituants.

A titre de base de Lewis utilisable dans ce procédé selon l'invention, on utilise un éther, tel que le tétrahydrofuranne (THF), le diéthyl éther, ou un composé aminé, tel que la tétraméthyl-éthylène-diamine (TMEDA). On utilise, selon une variante préférentielle, le THF ou un composé diaminé, tel que la tétraméthyl-éthylène-diamine (TMEDA).

Avantageusement, on utilise la base de Lewis selon un rapport molaire (base de Lewis / sel de terre(s) rare (s)) allant inclusivement de 2 à 8, et préférentiellement de 4 à 6.

A titre de diène conjugué de préformation utilisable pour préformer le système catalytique utilisé dans le procédé selon l'invention, on peut citer le 1, 3-butadiène ou le 2-méthyl 1, 3-butadiène (isoprène), à titre préférentiel.

On peut également citer les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire (diène conjugué de préformation / sel de terre rare) peut présenter une valeur allant de 15 à 70.

A titre de sel de terre rare utilisable dans ce système catalytique, on peut avantageusement utiliser :

- dans un premier cas : un sel de terre(s) rare(s) d'un acide carboxylique, tel qu'un carboxylate de néodyme et par exemple le tris(2-éthyl hexanoate) de néodyme, le tris(naphténate) de néodyme ou le tris(versatate) de néodyme, ou bien,
- dans un second cas : un sel de terre(s) rare(s) d'un acide phosphorique, tel que tris[di(2-éthyl-hexyl)phosphate] de néodyme.

A titre de sels dudit ou desdits métaux de terre(s) rare(s) d'un acide carboxylique utilisables dans le procédé conforme à l'invention, on peut citer à titre préférentiel des organocarboxylates du néodyme, du cérium, du didyme et préférentiellement le tris [2-éthylhexanoate] de néodyme ($Nd(O)_3$ en abrégé ci-après) ou le tris [versatate] de néodyme ($Nd(V)_3$ en abrégé ci-après).

A titre de sels dudit ou desdits métaux de terre(s) rare(s) d'un acide phosphorique utilisables dans le procédé conforme à l'invention, on peut citer à titre préférentiel des organophosphates du néodyme, du cérium, du didyme et préférentiellement le tris [ditbutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [di (2-éthylhexyl) phosphate] de néodyme. On peut également utiliser, à titre de sel, un mélange de plusieurs sels d'un acide phosphorique organique d'un métal de terre(s) rare(s).

Selon un exemple préférentiel commun à ces modes de réalisation, on utilise à titre de sel un tris[bis(2-éthylhexyl) phosphate] dudit ou desdits métaux de terre(s) rare(s). A titre encore plus préférentiel, ledit sel de terre(s) rare(s) est le tris[bis(2-éthylhexyl)phosphate] de néodyme ($Nd(P)_3$ en abrégé ci-après).

Le sel de terre(s) rare(s) d'un acide phosphorique peut être utilisé sous forme d'une solution dans un solvant organique aliphatique ou cycloaliphatique qui peut comporter de un organoacide libre en excès ou de l'eau résiduelle en fonction des conditions de préparation par ailleurs connues en soi.

Le sel de terre(s) rare(s) peut être préparé soit en continu, soit en discontinu comme décrit dans le document de brevet WO-A-02/38636. Lorsque le sel d'un ou plusieurs métaux de terre(s) rare(s) se présente sous la forme d'une poudre non hygroscopique, le temps de solubilisation dans le solvant est variable en fonction des conditions de solubilisation utilisées.

Ainsi, selon un premier mode de réalisation, le sel de terre(s) rare(s) se présentant sous forme d'une poudre non hygroscopique ayant une légère tendance à s'agglomérer à la température ambiante est mis en solution dans un solvant hydrocarboné, inerte, aliphatique ou alicyclique de bas poids moléculaire, tel que le cyclohexane, le méthylcyclohexane, l'hexane pur ou sous forme de coupe de solvants aliphatique et alicyclique de point d'ébullition allant de 65°C à 72°C, le n-heptane, ou un mélange de ces solvants. A titre préférentiel, on utilise le cyclohexane et/ou le méthylcyclohexane à titre de solvants hydrocarbonés inertes.

Selon un autre mode de réalisation préférentiel, comme par exemple décrit dans le document de brevet WO-A-00/64 910, le sel de terre(s) rare(s) mis à réagir est synthétisé « in situ » directement dans le solvant, c'est-à-dire que la réaction du dérivé de l'acide phosphorique avec le composé de métal de terre(s) rare(s) est réalisée en présence dudit solvant pour former le sel de terre(s) rare(s) dans ledit solvant, ledit sel se présentant sous forme d'une solution plus ou moins visqueuse qui contient le composé de la formule $Nd(P)_3.x\, PH$, dans laquelle x est un nombre, entier ou non, égal ou supérieur à 0, et PH représente un acide libre qui est un diester de l'acide phosphorique de formule $[(RO)_2 (HO)P = 0]$ résultant de la synthèse « in situ ».

Selon un autre mode de réalisation, la solution de métal de terre(s) rare(s) préparée selon le premier mode de réalisation peut contenir de l'acide libre de formule $(RO)_2(HO)P = 0$ qui est ajouté pendant ou postérieurement à la solubilisation du sel à l'état de poudre.

A titre de solvant hydrocarboné inerte utilisable dans le système catalytique selon l'invention, on peut par exemple utiliser un solvant aromatique, tel que le toluène, ou bien un solvant aliphatique ou alicyclique, tel que le n-heptane, le cyclohexane ou le méthylcyclohexane.

A titre de dérivé allylique de l'aluminium, qui est utilisé spécifiquement comme agent d'alkylation dans le système catalytique selon l'invention, on utilise avantageusement un dérivé dont le radical allylique est choisi dans le groupe constitué par les dérivés butadiényle, isoprényle, oligobutadiényle et oligoisoprényle, le nombre d'unités de ces oligomères étant par exemple compris entre 1 et 10 et préférentiellement est égal à 5.

Selon une autre caractéristique de l'invention, ledit dérivé allylique de l'aluminium comprend de préférence le produit de la réaction d'un dérivé allylique du lithium de formule R"Li, tel qu'un (oligo)butadiényle lithium ou un (oligo) isoprényle lithium qui est le précurseur du dérivé allylique de l'aluminium, et d'un agent halogénant de formule $X_nAlR'_{3-n}$,

où X est un halogène et où R', R" et n sont tels que définis ci-dessus.

Ledit dérivé allylique du lithium de formule R"Li est le produit de la réaction d'un diène conjugué, tel que le 1,3-butadiène ou l'isoprène, avec un alkyllithium, tel que du sec-butyl lithium, dans un solvant aromatique, aliphatique ou cycloaliphatique, tel que du cyclohexane ou du méthylcyclohexane. Ledit dérivé allylique de lithium pourrait également être obtenu par toute autre méthode de synthèse connue de l'homme du métier pour l'obtention d'un alkyllithium. On notera que ledit dérivé allylique de lithium R"Li doit être utilisé le plus pur possible, c'est-à-dire, exempt de toute trace d'alkyllithium résiduel, tel que du sec-butyl lithium.

Selon une première forme d'exécution, le dérivé allylique du lithium et l'agent halogénant sont mis à réagir en quantités stoechiométriques.

Selon une forme préférentielle de l'exécution de l'invention, le dérivé allylique du lithium est mis à réagir avec un excès d'agent halogénant.

Egalement à titre préférentiel, ledit donneur d'halogène du catalyseur correspond audit agent halogénant de formule $X_n AlR'_{3-n}$, utilisé en excès, lequel a réagi en partie seulement avec ledit dérivé allylique du lithium pour l'obtention dudit dérivé allylique de l'aluminium.

Plus précisément, on fait réagir dans ce cas $h+x/n$ moles dudit agent halogénant $X_n AlR'_{3-n}$ pour nh moles dudit dérivé allylique du lithium R"Li, avec $h\geq1$, $1\leq n\leq3$ et $1 \leq x \leq 4$, de telle manière que cet agent halogénant exerce les deux fonctions suivantes :

- une première partie (h moles par rapport au sel de terre rare) réagit avec le dérivé allylique du lithium R"Li pour générer le dérivé allylique de l'aluminium $R"_n AlR'_{3-n}$ selon la réaction $n R"Li + X_n AlR'_{3-n} \rightarrow R"_n AlR'_{3-n} + nLiX$ , et
- une seconde partie ($x/n$ moles par rapport au sel de terre rare) forme ledit donneur d'halogène pour l'halogénation de ce sel.

Avantageusement, on fait réagir h+3 moles dudit agent halogénant pour h moles dudit dérivé allylique du lithium et pour 1 mole dudit sel de terre(s) rare(s), i.e. x = 3 et n = 1.

Avantageusement, h (nombre de moles par rapport au sel de terre rare) est compris entre 2 et 20. Lorsque le sel de terre rare utilisé est par exemple le $Nd(V)_3$, la valeur de h est préférentiellement comprise entre 6 et 20, plus préférentiellement comprise entre 6 et 15 et encore plus préférentiellement comprise entre 8 et 15. Lorsque le sel de terre rare utilisé est par exemple le $Nd(P)_3$, la valeur de h est préférentiellement comprise entre 2 et 20, plus préférentiellement comprise entre 2 et 15 et encore plus préférentiellement comprise entre 2 et 10.

Selon un premier mode de réalisation du procédé conforme à l'invention dans lequel ledit système catalytique est spécifiquement préformé antérieurement à ladite réaction de polymérisation, c'est-à-dire par mise en contact des différents constituants catalytiques à une température éventuellement supérieure à la température ambiante, par exemple 15 minutes à 60 °C, suivie d'un vieillissement des constituants catalytiques avant la polymérisation, optionnellement en présence dudit diène conjugué de préformation, ledit agent halogénant utilisé pour l'obtention dudit dérivé allylique de l'aluminium est spécifiquement à base de brome ou de chlore, cet agent halogénant étant alors avantageusement un monobromure de dialkylaluminium, tel que le bromure de diéthylaluminium ou un monochlorure de dialkylaluminium, tel que le chlorure de diéthylaluminium.

Comme défini dans le cas (i), le procédé selon ce premier mode de l'invention peut comprendre l'incorporation de ladite base de Lewis à un pré-mélange comprenant ledit solvant hydrocarboné inerte, ledit dérivé allylique du lithium et ledit donneur d'halogène, puis un ajout dudit sel de terre rare à ce pré-mélange pour la synthèse dudit système catalytique.

Comme défini dans le cas (i), le procédé selon ce premier mode de l'invention peut, conformément à une autre variante, comprendre l'incorporation de ladite base de Lewis audit sel de terre rare, qui est destiné à être ajouté à un pré-mélange comprenant ledit solvant hydrocarboné inerte, ledit dérivé allylique du lithium et ledit agent halogénant, pour la synthèse dudit système catalytique.

Comme défini en variante dans le cas (ii), le procédé selon ce premier mode de l'invention peut comprendre l'incorporation de ladite base de Lewis directement au milieu de polymérisation comprenant ledit système catalytique et le(s)dit(s) monomère(s) à polymériser. Dans cette variante, on prépare ledit système catalytique en réalisant un pré-mélange comprenant ledit solvant hydrocarboné inerte, ledit dérivé allylique de l'aluminium et ledit donneur d'halogène, puis un ajout dudit sel de terre rare à ce pré-mélange.

Selon un second mode de réalisation du procédé conforme à l'invention dans lequel ledit système catalytique est spécifiquement formé *in situ,* c'est-à-dire où tous les constituants catalytiques, c'est-à-dire ledit solvant, ledit monomère, ledit sel de terre(s) rare(s), ledit dérivé allylique du lithium, ledit agent halogénant, sont introduits dans le réacteur juste avant polymérisation dans, ledit agent halogénant étant alors à base de chlore, et avantageusement un monochlorure d'alkylaluminium, tel que le chlorure de diéthylaluminium, et l'on incorpore ladite base de Lewis directement au milieu de polymérisation, comme défini dans le cas (ii).

Conformément à l'un ou l'autre de ces deux modes de réalisation du procédé conforme à l'invention, ledit système catalytique est de préférence obtenu en mélangeant directement ledit solvant, ledit dérivé allylique du lithium, ledit agent halogénant présent en excès pour l'obtention dudit agent d'alkylation ainsi que ledit donneur d'halogène et ledit sel.

Selon le procédé conforme à l'invention, on notera que le rapport molaire (agent d'alkylation / sel de terre(s) rare(s)) dans ledit système catalytique présente une valeur allant de 1 à 20.

Selon une variante non conforme à l'invention de ces deux modes de réalisation, dans laquelle le système catalytique est spécifiquement préformé et l'agent halogénant est à base de chlore, et dans laquelle on n'incorpore pas de base de Lewis au système catalytique ni au milieu de polymérisation, on peut obtenir via l'ajout d'un agent électrophile approprié, tel que la DEAB, une fonctionnalisation de l'élastomère spécifiquement par des dérivés carbonyles avec des taux de fonctionnalisation satisfaisants, mais avec des indices de polydispersité Ip supérieurs à 2,5 et donc trop élevés en vue d'une utilisation de l'élastomère dans une bande de roulement d'un bandage pneumatique.

Concernant ledit donneur d'halogène selon l'invention, on notera que l'exclusion des sesquihalogénures d'alkylaluminium est une condition nécessaire pour l'obtention de polybutadiènes présentant à la fois une viscosité Mooney ML(1+4) à 100° C égale ou supérieure à 40 et un indice de polydispersité Ip inférieur à 2,5.

Selon le procédé conforme à l'invention, on notera que le rapport molaire (donneur d'halogène / sel de terre rare) peut présenter une valeur allant de 2 à 3,5 et, de préférence, allant de 2,6 à 3.

Selon une variante d'exécution du procédé conforme à l'invention, il est possible de mettre en présence, comme connu en soi d'après le document de brevet WO-A1- 2006/133.757, en décalé par rapport au système catalytique utilisé pour la réaction de polymérisation, en continu ou en discontinu, du ou des monomère(s) à polymériser, une quantité supplémentaire prédéterminée d'au moins un composé alkylaluminium de formules $AlR_3$ ou $HAlR_2$ ou $R''_nAlR'_{3-n}$, dans lesquelles R et R' représentent un groupe alcoyle saturé ou non, préférentiellement de un à douze atomes de carbone, R" représente un groupe allylique, n un entier inclusivement de 1 à 3 et H représente un atome d'hydrogène dans le réacteur de polymérisation lorsqu'on opère en discontinu ou dans l'unité industrielle de polymérisation lorsqu'elle fonctionne en continu, c'est-à-dire pas en même temps et, par conséquent, soit avant, soit après, soit en partie avant et en partie après, par rapport à l'introduction du système catalytique avantageusement préformé utilisé pour la réaction de polymérisation.

On peut citer à titre d'alkylaluminiums des composés de formule $AlR_3$ tels que des trialkylaluminiums, par exemple le triisobutylaluminium, des composés de formule $HAlR_2$, tels que par exemple l'hydrure de diisobutylaluminium ou un composé aluminique qui, avantageusement, est identique à celui utilisé comme agent d'alkylation du système catalytique.

La quantité ajoutée d'au moins un composé d'alkylaluminium de formules $AlR_3$ ou $HAlR_2$ ou $R''_nAlR'_{3-n}$, où R, R', R" et n sont tels que définis ci-dessus, qui est identique ou non à celui de l'agent d'alkylation dudit système catalytique, est variable car fonction de l'un ou plusieurs ou tous les paramètres réactionnels énumérés à titre non limitatif ci-après, notamment du ou des monomère(s) diénique(s) à polymériser ou copolymériser, des conditions de polymérisation, des caractéristiques macrostructurales et/ou microstructurales visées de l'élastomère diénique à obtenir, du niveau fluctuant d'impuretés présentes, en cas de polymérisation en continu, dans l'unité industrielle de polymérisation, notamment dans le solvant de polymérisation, du temps de séjour dans le réacteur de polymérisation.

L'homme du métier ajustera dans une unité industrielle de polymérisation opérant en continu, comme connu en soi, la quantité de composé alkylaluminium à ajouter en décalé par rapport au système catalytique en fonction du ou des paramètre(s) pris en considération.

Selon une forme d'exécution préférentielle de l'invention, l'introduction en décalé dudit composé alkylaluminium est réalisée par l'introduction de la totalité dudit composé akylaluminium avant l'introduction du système catalytique et, par voie de conséquence, avant la polymérisation du monomère ou des monomères à polymériser ou copolymériser.

Avantageusement, le rapport molaire (composé alkylaluminium ajouté en décalé et avantageusement avant réaction / alkylaluminium dans le système catalytique) varie de 1 : 20 à 10: 1 et selon une forme d'exécution avantageuse varie de 0,05 à 3 et plus préférentiellement de 0,005 à 1.

Lorsque ledit rapport est inférieur ou égal à 5, l'activité catalytique est très élevée lorsque le sel de terre(s) rare(s) est un phosphate, la distribution des masses moléculaires est étroite et l'indice Ip inférieur ou égal à 2,1, tandis que lorsque ce rapport est relativement élevé, c'est-à-dire allant de 15 à 20, la distribution des masses moléculaires est large et l'indice Ip égal ou supérieur à 2,5.

On notera que l'ajout dudit composé alkylaluminium, avant l'utilisation du système catalytique présent cette valeur réduite de rapport molaire (agent d'alkylation / sel de terre(s) rare(s)), permet de reproduire le résultat obtenu avec un système catalytique analogue mais dont le rapport molaire précité serait plus élevé, en termes de macrostructure et microstructure de l'élastomère (viscosité Mooney et fort taux d'enchaînements cis-1,4, notamment).

On notera en outre que cette utilisation pour le rapport molaire (agent d'alkylation / sel de terre(s) rare(s)) d'une valeur réduite allant de 1 à 10, plus avantageusement de 1 à 5, conjointement à l'ajout préalable dudit composé alkylaluminium, se traduit avantageusement par une quantité totale moindre d'organo-aluminiums, utilisés à la fois dans ledit système catalytique et avant polymérisation

Selon une autre caractéristique préférentielle de l'invention, la quantité dudit composé alkylaluminium mis en présence avec le(s)dit(s) monomère(s) à polymériser varie inclusivement de 10 à 5000 micromoles pour 100 g de monomère diène conjugué à polymériser, notamment en fonction des caractéristiques de macrostructure visées pour ledit élastomère et/ou de la quantité d'impuretés présentes dans le milieu de polymérisation, telles que des impuretés provenant de solvants de recyclage.

On notera que la mise en présence en décalé et avantageusement avant polymérisation du ou des monomères à polymériser avec ledit composé alkylaluminium permet, selon l'invention, de moduler avec une bonne flexibilité et à moindre coût l'activité du système catalytique en fonction de la nature du ou des monomères choisis et des caractéristiques de macrostructure de l'élastomère diénique obtenu, telles que sa viscosité Mooney. Il est ainsi possible de faire varier, sur une unité dédiée à la polymérisation de monomères de réactivités respectives différentes et/ou dédiée à l'obtention d'élastomères présentant une large plage de viscosités Mooney ML (1+4) à 100 °C, c'est-à-dire allant de 25 à 100, une distribution étroite de masse moléculaire, et présentant des propriétés de fluage à froid tout à fait satisfaisantes pour une utilisation dans des bandes de roulement de pneumatiques, l'activité du système catalytique utilisé et donc le rendement de polymérisation, tout en utilisant une seule et même formule de système catalytique.

On notera également que cet ajout dudit composé alkylaluminium en décalé et avantageusement avant polymérisation permet de régler l'activité du système catalytique en fonction des conditions de polymérisation, telles que la température et/ou le temps de séjour dans le ou chaque réacteur de polymérisation, ce qui peut notamment constituer un gain de productivité en cas de réduction du temps de séjour pour l'obtention d'un élastomère de caractéristiques données.

En d'autres termes, le procédé de polymérisation selon l'invention présente une grande flexibilité d'utilisation en polymérisation continue ou discontinue, du fait qu'il rend l'unique système catalytique utilisé équivalent à une palette de systèmes catalytiques d'activités différentes.

A titre de composé alkylaluminium qui est mis en présence avec le(s) monomère(s) à polymériser avant la réaction de polymérisation, on peut citer des alkylaluminiums tels que:

- des trialkylaluminiums, par exemple le triméthylaluminium, le triéthylaluminium, le tri-n-propylaluminium, le triisopropylaluminium, le tri-n-butylaluminium, le tri-t-butylaluminium, le triisobutylaluminium, le tri-n-pentylaluminium, le tri-n-hexylaluminium, le tri-n-octylaluminium, le tricyclohexylaluminium, ou
- des hydrures de dialkylaluminium, par exemple l'hydrure de diéthylaluminium, l'hydrure de diisopropylaluminium, l'hydrure de di-n-propylaluminium, l'hydrure de diisobutylaluminium, l'hydrure de di-n-octylaluminium, l'hydrure de di-n-butylaluminium.

On notera que cet agent d'alkylation est de préférence constitué de l'hydrure de diisobutylaluminium (« HDiBA » en abrégé ci-après).

Avantageusement, le rapport molaire (composé alkylaluminium ajouté avant réaction / alkylaluminium dans le système catalytique) varie de 1 : 20 à 5 : 1.

Selon une autre caractéristique préférentielle de l'invention, la quantité dudit composé alkylaluminium mis en présence avec le(s)dit(s) monomère(s) à polymériser varie de 10 à 5000 micromoles et avantageusement de 100 à 1500 micromoles pour 100 g de monomère diène conjugué à polymériser, notamment en fonction des caractéristiques de macrostructure visées pour ledit élastomère et/ou de la quantité d'impuretés présentes dans le milieu de polymérisation, telles que des impuretés provenant de solvants de recyclage.

On notera que la mise en présence avant polymérisation du ou des monomères à polymériser avec ledit composé alkylaluminium permet, selon le procédé conforme à l'invention, de moduler l'activité du système catalytique en fonction de la nature du ou des monomères choisis et des caractéristiques de macrostructure de l'élastomère diénique obtenu, telles que sa viscosité Mooney. Il est ainsi possible de faire varier, sur une unité dédiée à la polymérisation de monomères de réactivités respectives différentes et/ou dédiée à l'obtention d'élastomères présentant une large plage de viscosités Mooney, l'activité du système catalytique utilisé et donc le rendement de polymérisation, tout en utilisant une seule et même formule de système catalytique.

On notera également que cet ajout dudit composé alkylaluminium avant polymérisation permet de régler l'activité du système catalytique en fonction des conditions de polymérisation, telles que la température et/ou le temps de séjour dans le ou chaque réacteur de polymérisation, ce qui peut notamment constituer un gain de productivité en cas de réduction du temps de séjour pour l'obtention d'un élastomère de caractéristiques données.

En d'autres termes, le procédé de polymérisation selon l'invention présente une grande flexibilité d'utilisation en polymérisation continue ou discontinue, du fait qu'il rend l'unique système catalytique utilisé équivalent à une palette de systèmes catalytiques d'activités différentes.

Selon une forme d'exécution du procédé de l'invention, le système catalytique peut être préparé en continu selon le procédé décrit dans le document de brevet WO-A-2007/045417 et la réaction de polymérisation peut être mise en oeuvre en continu ou en discontinu, dans un solvant de polymérisation hydrocarboné inerte, tel que du cyclohexane ou du méthylcyclohexane, ou bien en masse, et à une température allant de préférence de 0 à 100° C.

Avantageusement, lorsqu'on met en oeuvre la réaction de polymérisation en continu dans l'installation décrite dans le document de brevet WO-A-2007/045417, ledit composé alkylaluminium est introduit en une entrée de ligne située en amont d'au moins un réacteur de polymérisation, puis le sel de terre(s) rare(s) en amont d'au moins un réacteur de polymérisation dans lesquels est (sont) introduit(s) le(s) monomère(s) à polymériser et la base de Lewis est introduite simultanément ou séquentiellement par rapport à l'introduction des monomères, ce qui permet avantageusement de coupler la synthèse en continu dudit système catalytique à une polymérisation d'au moins un diène conjugué également mise en oeuvre en continu dans un réacteur de polymérisation disposé à l'extrémité de la ligne.

On notera que l'introduction en décalé du composé alkylaluminium peut également être effectué après celle du système catalytique préformé, notamment sur une entrée de ligne du catalyseur, d'une unité de polymérisation opérant en continu, mais avant polymérisation du ou des monomère(s) à polymériser.

Selon une forme d'exécution avantageuse, le précurseur allylique du lithium et l'excès d'agent halogénant sont introduits en entrée de ligne à l'aide d'un mélangeur dynamique de type parfaitement agité, suivi d'une introduction du sel de terre(s) rare(s) à l'aide d'un mélangeur disposant d'une agitation de type statique.

On notera que dans ce cas, et cela d'autant plus que le rapport molaire (agent d'alkylation / sel de terre(s) rare (s)) est plus réduit, l'ajout du composé alkylaluminium avant polymérisation permet de s'affranchir des fluctuations dans le temps des impuretés dues aux solvants de polymérisation qui sont recyclés en entrée de ligne et de ne pas pénaliser, du fait de ces fluctuations, l'activité du système catalytique, de sorte à minimiser la dispersion des caractéristiques de l'élastomère obtenu.

On notera que l'ajout selon l'invention dudit composé alkylaluminium permet également d'obtenir, même en présence de telles impuretés, la reproduction mentionnée ci-dessus du résultat procuré par un système catalytique analogue, mais dont le rapport molaire (agent d'alkylation / sel de terre(s) rare(s)) serait plus élevé.

A titre d'élastomère diénique fonctionnalisé pouvant être préparé par le procédé selon l'invention, on peut citer tout homopolymère ou copolymère obtenu par homopolymérisation ou copolymérisation d'au moins un monomère diène conjugué ayant de 4 à 12 atomes de carbone, éventuellement avec un composé vinylaromatique.

A titre de monomère(s) diène(s) conjugué(s) conviennent notamment le butadiène-1,3, l'isoprène, les 2,3-di (alcoyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères à fonctionnaliser peuvent contenir entre 99 % et 20 % en poids d'unités diéniques et entre 1 % et 80 % en poids d'unités vinylaromatiques.

Les élastomères fonctionnalisés peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères fonctionnalisés peuvent être par exemple à blocs, statistiques, séquencés, micro-séquencés.

De manière particulièrement préférentielle, ledit élastomère diénique à fonctionnaliser est choisi dans le groupe des élastomères diéniques fortement insaturés constitué par les polybutadiènes (BR), les polyisoprènes de synthèse (IR).

On notera que dans ce cas, et cela d'autant plus que le rapport molaire (agent d'alkylation / sel de terre(s) rare (s)) est plus réduit, l'ajout du composé alkylaluminium avant polymérisation permet de s'affranchir des fluctuations dans le temps des impuretés dues aux solvants de polymérisation qui sont recyclés en entrée de ligne et de ne pas pénaliser, du fait de ces fluctuations, l'activité du système catalytique, de sorte à minimiser la dispersion des caractéristiques de l'élastomère obtenu.

On notera que l'ajout dudit composé alkylaluminium permet également d'obtenir, même en présence de telles impuretés, la reproduction mentionnée ci-dessus du résultat procuré par un système catalytique analogue, mais dont le rapport molaire (agent d'alkylation / sel de terre(s) rare(s)) serait plus élevé.

Encore plus avantageusement, on incorpore ledit système catalytique dans sa totalité au milieu de polymérisation, soit en ladite entrée de ligne, soit directement dans ledit réacteur.

A titre d'élastomère diénique pouvant être préparé par le procédé selon l'invention, on peut citer tout homopolymère ou copolymère obtenu par homopolymérisation ou copolymérisation d'au moins un monomère diène conjugué ayant de 4 à 12 atomes de carbone, éventuellement avec un composé vinylaromatique.

A titre de monomère(s) diène(s) conjugué(s) conviennent notamment le butadiène-1,3, l'isoprène, les 2,3-di (alcoyle en C1 à C5)-1,3 -butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et entre 1 % et 80 % en poids d'unités vinylaromatiques. Les élastomères peuvent avoir toute microstructure qui est fonction des conditions de polymérisation utilisées. De manière particulièrement préférentielle, ledit élastomère diénique est choisi dans le groupe des élastomères diéniques fortement insaturés constitué par les polybutadiènes (BR), les polyisoprènes de synthèse (IR), les copolymères de butadiène-styrène (SBR), les copolymères de butadiène-isoprène (BIR), les copolymères d'isoprène-styrène (SIR) et les copolymères de butadiène-styrène-isoprène (SBIR).

A titre d'agent de fonctionnalisation utilisable dans le procédé selon l'invention pour l'obtention dudit élastomère fonctionnalisé, on peut utiliser tout agent électrophile approprié pour améliorer l'interaction dudit élastomère avec une charge renforçante de type noir de carbone ou de type charge inorganique renforçante, telle que de la silice.

On notera que les systèmes catalytiques utilisés dans le procédé selon l'invention permettent notamment d'obtenir des homopolymères fonctionnalisés du butadiène présentant à la fois une viscosité Mooney ML(1+4) à 100° C, mesurée selon la norme ASTM D 1646, qui est égale ou supérieure à 40, un taux d'enchaînements cis-1,4 (mesuré par la technique « NIR » de dosage par proche infrarouge, voir annexe 1 jointe) qui est supérieur à 90 %, et un indice de polydispersité inférieur à 2,5 (mesuré par la technique de chromatographie d'exclusion par la taille SEC, voir annexe 2 jointe).

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes.

EXEMPLES

Dans les exemples qui suivent, toutes les manipulations ont été réalisées sous atmosphère d'azote en suivant les règles usuelles de la manipulation sous atmosphère inerte.

Pour déterminer la microstructure des polymères préparés, on a utilisé la technique de dosage appelée « proche infrarouge » (NIR - voir Annexe 1). Il s'agit d'une méthode indirecte faisant appel à des élastomères « témoin » dont la microstructure a été mesurée par la technique de RMN$^{13}$C. On utilise la relation quantitative (loi de Beer-Lambert) existant entre la répartition des monomères dans un élastomère et la forme du spectre NIR de celui-ci.

La détermination des masses molaires et de l'indice de polydispersité des polymères est réalisée par la technique de chromatographie stérique (voir Annexe 2).

La viscosité inhérente $\eta_{inh}$ à 0,1 g/dl dans le toluène est mesurée à 25° C selon la méthode décrite en annexe 3, et la viscosité Mooney ML (1+4) à 100° C mesurée selon la norme ASTM D 1646,

Les dosages de la DEAB greffée en bout de chaîne a été réalisé par RMN à partir des signaux correspondants aux protons -CH$_2$-N-.Les dosages du GLYMO greffé en bout de chaîne a été réalisé pr RMN à partir des signaux correspondants aux protons -CH$_2$-Si-.

**A- Exemples de synthèse discontinue de polybutadiènes fonctionnalisés au moyen se systèmes catalytiques selon l'invention à base de tris(versatate de Nd).**

On réalise en premier lieu 2 essais témoins de préparation de polybutadiènes fonctionnalisés au moyen d'un système catalytique dépourvu d'une base de Lewis.

*Contre-exemple 1 - Préparation d'un polybutadiène témoin fonctionnel DEAB sans ajout de base de Lewis*

Cet exemple décrit un essai de polymérisation du butadiène dans le cyclohexane, au moyen d'un système catalytique préformé de formule :

oligobutadiényle lithié / bromure de diéthylaluminium / tris(versatate) de néodyme, aux rapports molaires 12/15/1.

1) Préparation du catalyseur

a) Préparation du dérivé allylique du lithium :

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.

Afin de déterminer le titre exact de cette solution, on a réalisé un dosage de Gilman.

b) Préparation du système catalytiques :

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 3 mmoles de prépolymère lithié, et
- 3,75 mmoles de bromure de diéthyl aluminium, à titre d'agent halogénant.

Après un temps de contact de 1 minute environ à température ambiante, on a adjoint au pré-mélange ainsi obtenu 0,25 mmoles de tris(versatate) de néodyme en solution à 0,19 mol/L dans le cyclohexane.

On a ensuite attendu une minute avant d'utiliser ce système catalytique en polymérisation. Même stocké à -20° C dans un congélateur, il est à noter que ce système catalytique ne doit pas être utilisé après un laps de temps supérieur à 5 minutes à compter de sa synthèse. L'agent d'alkylation et le donneur d'halogène selon l'invention sont ainsi respectivement formés d'un oligobutadiényle aluminium et du bromure de diéthylaluminium.

2) Polymérisation du butadiène :

Dans une série de bouteilles de 250 ml préalablement lavées et séchées, on a introduit successivement à température ambiante :

- 90 ml de cyclohexane fraîchement barboté à l'azote,
- 10 g de butadiène, et
- une quantité de ce système catalytique correspondant à 5 μmoles de néodyme.

On a ensuite agité la bouteille à 60° C pendant les durées renseignées en minutes dans le tableau 1. Puis on a stoppé la polymérisation par l'injection de méthanol et l'on a ajouté au polybutadiène un agent de protection le 2,2'-métyhylène bis-4-méthyl-6-tertio-butylyphénol commercialisé par la société WESTCO sous la dénomination « AO2246 » (selon un volume d'1 ml d'une solution de toluène à 100 g/l) pour la solution polymérique obtenue. Le taux de conversion a été déterminé par extrait sec. Le tableau 1 ci-après montre l'évolution du polymère en fonction de la conversion par mesure de la viscosité inhérente et de la Mn.

En parallèle, le contenu d'une bouteille correspondant à un temps de polymérisation de 40 min. a été fonctionnalisé par ajout de 1 partie en poids pour cent d'élastomère (« pce » en abrégé) de DEAB avant l'étape de stoppage au méthanol décrite ci-dessus, puis on a agité le milieu réactionnel ainsi obtenu pendant 30 min. à 60° C. On a ensuite procédé au stoppage par le méthanol, puis à la stabilisation de l'élastomère par ajout d'anti-oxydant.

Tableau 1 :

| Temps (min.) | Conversion (%) | Viscosité inhérente (dl/g) | Mn (g/mol) Ip |
|--------------|----------------|----------------------------|---------------|
| 5 | 32 | 1,39 | 78 000 1,4 |
| 10 | 55 | 2,14 | 120 000 1,5 |
| 15 | 68 | 2,59 | 160 000 1,5 |
| 20 | 80 | 2,86 | 170 000 1,7 |
| 40 | 100 | 2,98 | 180 000 |

(suite)

| Temps (min.) | Conversion (%) | Viscosité inhérente (dl/g) | Mn (g/mol) Ip |
|---|---|---|---|
| | | | 1,7 |
| 40 (fonctionnalisation) | 100 | 3,02 | 180 000 1,8 |

La distribution de masses moléculaires relative à l'essai de fonctionnalisation après 40 minutes montre que le polymère obtenu présente une traînée de bas poids moléculaires, et que ces bas poids ne sont pas fonctionnalisés (au vu des réponses du réfractomètre et du détecteur UV).

Le taux de fonction calculé est de 2,6 méq/kg, ce qui correspond à taux de fonctionnalisation moyen de 46,8 % des chaînes de polymères.

On peut imputer ce faible taux de fonctionnalisation au couplage du dérivé allylique de l'aluminium dans les chaînes du polymère, au cours de la conversion.

*Contre-exemple 2 - Préparation d'un polybutadiène témoin fonctionnel GLYMO sans ajout de base de Lewis*

Le mode opératoire du contre-exemple 1 est reproduit à l'identique, à l'exception près que le GLYMO est utilisé plutôt que la DEAB.

Le polymère fonctionnel obtenu présente les caractéristiques suivantes : Mn = 175 000 g/mol ; IP = 1,8 ; le taux de fonction GLYMO calculé est de 2,8 méq/kg de polymère, ce qui correspond à un taux de fonctionnalisation moyen de 49% des chaînes de polymère. La distribution de masses moléculaires présente une traînée de bas poids.

*Exemple 1 - Préparation d'un polybutadiène fonctionnel DEAB avec ajout de base de Lewis THF au catalyseur (rapport 4).*

Le mode opératoire du contre-exemple 1 est reproduit à l'identique, à l'exception près que 4 équivalents de THF par rapport au néodyme sont additionnés au préalable à la solution de tris(versatate) de néodyme dans le cyclohexane. Le polymère fonctionnel DEAB obtenu présente les caractéristiques suivantes : Mn = 150 000 g/mol, IP = 1,8, le taux de fonction DEAB calculé est de 4,8 méq/kg, ce qui correspond à un taux de fonctionnalisation moyen de 72% de chaînes de polymère.

*Exemple 2 - Préparation d'un polybutadiène fonctionnel DEAB avec ajout de base de Lewis THF au milieu de polymérisation (rapport 4)*

Le mode opératoire du contre-exemple 1 est reproduit à l'identique, à l'exception près que 4 équivalents de THF par rapport au néodyme sont additionnés au milieu de polymérisation, immédiatement avant l'introduction d'une quantité de système catalytique correspondant à 5 $\mu$mol de néodyme. Le polymère fonctionnel obtenu présente les caractéristiques suivantes : Mn : 145 000 g/mol, IP = 1,7, le taux de fonction DEAB calculé est de 4,7 méq/kg, ce qui correspond à un taux de fonctionnalisation moyen de 68,1% de chaînes de polymère.

*Exemple 3 - Préparation d'un polybutadiène fonctionnel DEAB avec ajout de base de Lewis TMEDA au milieu de polymérisation (rapport 4)*

Le mode opératoire du contre-exemple 1 est reproduit à l'identique, à l'exception près que 4 équivalents de TMEDA par rapport au néodyme sont additionnés au milieu de polymérisation, immédiatement avant l'introduction d'une quantité de système catalytique correspondant à 5 $\mu$mol de néodyme. Le polymère fonctionnel obtenu présente les caractéristiques suivantes : Mn : 165 000 g/mol, IP = 1,9, le taux de fonction DEAB calculé est de 4,6 méq/kg, ce qui correspond à un taux de fonctionnalisation moyen de 75,6% de chaînes de polymère.

*Exemple 4 - - Préparation d'un polybutadiène fonctionnel GLYMO avec ajout de base de Lewis TMEDA au milieu de polymérisation (rapport 4)*

Le mode opératoire du contre-exemple 2 est reproduit à l'identique, à l'exception près que 4 équivalents de TMEDA par rapport au néodyme sont additionnés au milieu de polymérisation, immédiatement avant l'introduction d'une quantité de système catalytique correspondant à 5 $\mu$mol de néodyme. Le polymère fonctionnel obtenu présente les caractéristiques suivantes : Mn : 180 000 g/mol, IP = 1,9, le taux de fonction GLYMO calculé est de 4,4 méq/kg, ce qui correspond à un taux de fonctionnalisation moyen de 79,2% de chaînes de polymère.

**B- Exemples de anthèse discontinue de polybutadiènes fonctionnalisés au moyen de systèmes catalytiques selon l'invention à base de Nd(P)3**

On réalise en premier lieu 2 essais témoins de préparation de polybutadiènes fonctionnalisés au moyen d'un système catalytique dépourvu d'une base de Lewis.

***Contre-exemple 3 - Préparation d'un polybutadiène témoin fonctionnel DEAB sans ajout de base de Lewis.***

Cet exemple décrit un essai de polymérisation du butadiène dans le méthylcyclohexane, au moyen d'un système catalytique préformé de formule :

oligobutadiényle lithié / chlorure de diéthylaluminium / tris(di-2-éthylhexylphosphate) de néodyme, aux rapports molaires 6/9/1.

1) Préparation du catalyseur

a) Préparation du dérivé allylique du lithium :

Dans une bouteille Steinie de 250 ml préalablement lavée et séchée et contenant un barreau aimanté, on a introduit sous agitation :

- un volume de méthylcyclohexane tel que le titre final de la solution de prépolymère soit de 0,4 M.
- 15,4 ml de butadiène, et
- 0,037 moles de butyllithium secondaire dosé juste avant l'expérience.

Après agitation pendant une heure dans un bac à 25° C, on a obtenu une solution d'un oligobutadiényle lithié comprenant 5 unités issues du butadiène.
Afin de déterminer le titre exact de cette solution, on a réalisé comme connu en soi un dosage de Gilman.

b) Préparation du système catalytique:

Dans une bouteille Steinie de 250 ml préalablement lavée et séchée, on a introduit :

- un volume de méthylcyclohexane tel que la concentration finale du système catalytique en néodyme soit de 0,02 M,
- un volume de la solution obtenue en a) correspondant à 1,5 mmoles de prépolymère lithié, et
- 2,25 mmoles de chlorure de diéthyl aluminium, à titre d'agent halogénant.

Après un temps de contact de 1 minute environ à température ambiante, on a adjoint au pré-mélange ainsi obtenu 0,25 mmoles de tris(di-2-éthylhexylphosphate) de néodyme en solution à 0,13 mol/L dans le méthylcyclohexane. On a ensuite attendu une minute avant d'utiliser ce système catalytique en polymérisation. Même stocké à -20° C dans un congélateur, il est à noter que ce système catalytique ne doit pas être utilisé après un laps de temps supérieur à 30 minutes à compter de sa synthèse. L'agent d'alkylation et le donneur d'halogène selon l'invention sont ainsi respectivement formés d'un oligobutadiényle aluminium et du chlorure de diéthylaluminium.

2) Polymérisation du butadiène :

Dans une série de bouteilles de 250 ml préalablement lavées et séchées, on a introduit successivement à température ambiante :

- 90 ml de méthylcyclohexane fraîchement barboté à l'azote,
- 10 g de butadiène, et
- une quantité de ce système catalytique correspondant à 5 μmoles de néodyme.

On a ensuite agité la bouteille à 60° C pendant les durées renseignées dans le tableau 2. Puis on a stoppé la polymérisation par l'injection de méthanol et l'on a ajouté au polybutadiène un agent de protection de dénomination « AO2246 » (selon un volume d' 1 ml d'une solution de toluène à 100 g/l) pour la solution polymérique obtenue. Le taux de conversion a été déterminé par extrait sec. Le tableau 2 ci-après montre l'évolution du polymère en fonction de la conversion par mesure de la viscosité inhérente et de la Mn.

En parallèle, le contenu d'une bouteille correspondant à un temps de polymérisation de 40 min. a été fonctionnalisé par ajout de 1 pce de DEAB avant l'étape de stoppage au méthanol décrite ci-dessus, puis on a agité le milieu réactionnel ainsi obtenu pendant 30 min. à 60° C. On a ensuite procédé au stoppage par le méthanol, puis à la stabilisation de l'élastomère par ajout d'anti-oxydant.

Tableau 2 :

| Temps (min.) | Conversion (%) | Viscosité inhérente (dl/g) | Mn (g/mol) Ip |
|---|---|---|---|
| 5 | 32 | 1,02 | 55 000 1,2 |
| 10 | 55 | 1,88 | 89 000 1,3 |
| 15 | 74 | 2,24 | 119 000 1,5 |
| 20 | 89 | 2,56 | 139 000 1,5 |
| 40 | 100 | 2,84 | 170 000 1,7 |
| 40 (fonctionnalisation) | 100 | 2,82 | 172 000 1,8 |

La distribution de masses moléculaires relative à l'essai de fonctionnalisation après 40 minutes montre que le polymère obtenu présente une traînée de bas poids moléculaires, et que ces bas poids ne sont pas fonctionnalisés (au vu des réponses du réfractomètre et du détecteur UV).

Le taux de fonction calculé est de 1,8 méq/kg, ce qui correspond à un taux de fonctionnalisation moyen de 31,1 % des chaînes de polymères.

On peut imputer ce faible taux de fonctionnalisation au couplage du dérivé allylique de l'aluminium dans les chaînes du polymère, au cours de la conversion.

***Contre-exemple 4 - Préparation d'un polybutadiène témoin fonctionnel GLYMO sans ajout de base de Lewis***

Le mode opératoire du contre-exemple 3 est reproduit à l'identique, à l'exception près que 3 pce de GLYMO sont utilisés plutôt que 1 pce de DEAB.

Le polymère fonctionnel obtenu présente les caractéristiques suivantes : Mn = 182 000 g/mol ; IP = 1,8 ; le taux de fonction GLYMO calculé est de 2,5 méq/kg de polymère, ce qui correspond à un taux de fonctionnalisation moyen de 45,5% des chaînes de polymères.

***Exemple 5 - Préparation d'un polybutadiène fonctionnel DEAB avec ajout de base de Lewis TMEDA au catalyseur (rapport 4)***

Le mode opératoire du contre-exemple 3 est reproduit à l'identique, à l'exception près que 4 équivalents de TMEDA par rapport au néodyme sont additionnés au préalable à solution de tris(di-2-éthylhexylphosphate) de néodyme dans le méthylcyclohexane. Le polymère fonctionnel DEAB obtenu présente les caractéristiques suivantes : Mn = 174 000 g/mol, IP = 1,8, le taux de fonction DEAB calculé est de 4,6 méq/kg, ce qui correspond à un taux de fonctionnalisation moyen de 80% de chaînes de polymère.

***Exemple 6 - Préparation d'un polybutadiène fonctionnel DEAB avec ajout de base de Lewis TMEDA au milieu de polymérisation (rapport 6)***

Le mode opératoire du contre-exemple 3 est reproduit à l'identique, à l'exception près que 6 équivalents de TMEDA par rapport au néodyme sont additionnés au milieu de polymérisation, immédiatement avant l'introduction d'une quantité de système catalytique correspondant à 5 µmol de néodyme. Le polymère fonctionnel obtenu présente les caractéristiques suivantes : Mn : 168 000 g/mol, IP = 1,7, le taux de fonction DEAB calculé est de 4,6 méq/kg, ce qui correspond à un taux de fonctionnalisation moyen de 77,3% de chaînes de polymère.

**Exemple 7 - Préparation d'un polybutadiène fonctionnel GLYMO avec ajout de base de Lewis TMEDA lors de la préparation du catalyseur (rapport 4)**

Le mode opératoire du contre-exemple 4 est reproduit à l'identique, à l'exception près que 4 équivalents de TMEDA par rapport au néodyme sont additionnés au préalable à solution de tris(di-2-éthylhexylphosphate) de néodyme dans le méthylcyclohexane. Le polymère fonctionnel obtenu présente les caractéristiques suivantes : Mn = 192 000 g/mol, IP = 1,8, le taux de fonction GLYMO calculé est de 4,4 méq/kg, ce qui correspond à un taux de fonctionnalisation moyen de 84,5% de chaînes de polymère.

**Exemple 8 - Préparation d'un polybutadiène fonctionnel GLYMO avec ajout de base de Lewis TMEDA au milieu de polymérisation (rapport 6)**

Le mode opératoire du contre-exemple 2 est reproduit à l'identique, à l'exception près que 6 équivalents de TMEDA par rapport au néodyme sont additionnés au milieu de polymérisation, immédiatement avant l'introduction d'une quantité de système catalytique correspondant à 5 µmol de néodyme. Le polymère fonctionnel obtenu présente les caractéristiques suivantes : Mn : 174 000 g/mol, IP = 1,9, le taux de fonction GLYMO calculé est de 4,4 méq/kg, ce qui correspond à un taux de fonctionnalisation moyen de 76,6% de chaînes de polymère.

**C- Exemple de synthèse continue de polybutadiènes fonctionnalisés au moyen de systèmes catalytiques selon l'invention à base de Nd(P)3**

**Exemple 9 - Préparation d'un polybutadiène fonctionnel GLYMO avec ajout de base de Lewis TMEDA lors de la préparation du catalyseur (rapport 4)**

Cet exemple décrit un essai de polymérisation du butadiène en continu dans le cyclohexane, au moyen d'un système catalytique préformé selon l'invention de formule :

oligobutadiényle lithié / chlorure de diéthylaluminium / tris(di-2-éthylhexylphosphate) de néodyme, aux rapports molaires 7/10/1.

**Préparation du système catalytique**

a) Préparation du prépolymère oligobutadiényle lithium

Dans un réacteur discontinu de 100 L équipé d'un système d'agitation à pales, on a introduit sous agitation :

- un volume de méthylcyclohexane barboté à l'azote tel que le titre final de la solution de prépolymère soit de 1 M.
- 30 kg de butadiène, et
- 104 moles de butyllithium secondaire dosé juste avant l'expérience.

Après agitation pendant deux heures dans un bac à 40° C, on a obtenu une solution d'un oligobutadiényle lithié comprenant 5 unités issues du butadiène. Afin de déterminer le titre exact de cette solution, on a réalisé comme connu en soi un dosage de Gilman.

b) Préparation du système catalytique

Dans un réacteur de 300 Litres équipés d'un système d'agitation à pales, on a introduit :

- un volume de méthylcyclohexane tel que la concentration finale du système catalytique en néodyme soit de 0,04 M,
- 60 moles de chlorure de diéthyl aluminium, à titre d'agent halogénant
- un volume de la solution obtenue en a) correspondant à 42 moles de prépolymère lithié.

Après un temps de contact de 1 minute environ à la température de 40°C, on a adjoint au pré-mélange ainsi obtenu 6 moles de tris(di-2-éthylhexylphosphate) de néodyme en solution à 0,13 mol/L dans le méthylcyclohexane.

L'agent d'alkylation et le donneur d'halogène selon l'invention sont ainsi respectivement formés d'un oligobutadiényle aluminium et du chlorure de diéthylaluminium.

Le milieu réactionnel est ensuite stocké dans un container Inox et conservé à basse température (<-20°C) pendant 4 heures maximum avant utilisation.

## Polymérisations en continu du butadiène dans le cyclohexane

Trois essais de polymérisation sont réalisés. Chaque polymérisation a été réalisée dans ces exemples sur une ligne continue à deux réacteurs en série R1 et R2 identiques dont les températures ont été respectivement fixées à 90 C et 98° C, et le temps de séjour à 45 minutes par réacteur.

Le butadiène à polymériser, le solvant de polymérisation, le composé alkylaluminium (l'hydrure de diisobutylaluminium : « HDiBA » ci-après en abrégé) et optionnellement le composé base de Lewis (solution de TMEDA dans le cyclohexane à la concentration de 1 mol/L) sont injectés en entrée de ligne dans un mélangeur dynamique prévu en amont des deux réacteurs, puis le mélange ainsi obtenu a été introduit dans le premier réacteur R1. Le système catalytique est injecté directement dans le premier réacteur R1.

La quantité introduite de TMEDA correspond à 5 équivalents par rapport à la quantité de néodyme dans le catalyseur.

La base catalytique utilisée est de 350 μmoles pour 100 grammes de butadiène à polymériser. La concentration en monomère à l'entrée du réacteur R1 est de 17% massique. Le mélange monomère, solvant, HDiBA sont injectés dans le réacteur R1 à la température de 50°C. La concentration en HDiBA est telle que le rapport HDiBA / Néodyme du catalyseur est égal à 2.

L'agent fonctionnalisant est injecté en solution dans le cyclohexane en sortie du réacteur R1 et en amont d'un mélangeur statique. La DEAB et le GLYMO sont introduits à hauteur de 3 équivalents par rapport à la quantité totale d'aluminium dans le catalyseur.

Le stoppeur et l'antioxydant utilisés sont de l'acétylacétone et 0,2 pce d'un mélange 6-PPD/AO2246 respectivement. Le stoppeur et l'anti-oxydant sont injectés l'un après l'autre en sortie du réacteur R2, en amont de mélangeurs statiques.

En sortie du réacteur R2, le milieu réactionnel subit une étape de concentration (dévolatilisation partielle du solvant), une étape de stripping (élimination de la quasi-totalité du solvant) puis une étape de séchage.

Le tableau 3 décrit les caractéristiques des polymères obtenus, avec et sans ajout d'agents fonctionnalisant.

Tableau 3 :

| Essai | Mn en g/mol (IP) | %1,4-cis | Fonction | Quantité de fonction (méq/kg) | %Chaînes fonctionnalisées |
|-------|------------------|----------|----------|-------------------------------|---------------------------|
| A | 140 000 (2,4) | 96 | - | 0 | |
| B | 139 000 (2,4) | 96 | DEAB | 4,3 | 60 |
| C | 157 000 (2,5) | 95 | GLYMO | 4,2 | 66 |

## ANNEXE 1 : Détermination de la microstructure des polybutadiènes obtenus.

On a utilisé la technique de dosage appelée « proche infrarouge » (NIR). Il s'agit d'une méthode indirecte faisant appel à des élastomères « témoin » dont la microstructure a été mesurée par la technique de RMN[13]C. On utilise la relation quantitative (loi de Beer-Lambert) existant entre la répartition des monomères dans un élastomère et la forme du spectre NIR de celui-ci. Cette technique est mise en oeuvre en deux étapes :

1) Etalonnage :

- On procède à l'acquisition des spectres respectifs des élastomères « témoin ».
- On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :

(1) P. GELADI et B. R. KOWALSKI« Partial Least Squares regression : a tutorial »,Analytica Chimica Acta, vol. 185, 1-17 (1986).

(2) M. TENENHAUS« La régression PLS - Théorie et pratique »Paris, Editions Technip (1998).

2) Mesure :

- On procède à un enregistrement du spectre de l'échantillon.
- On réalise le calcul de la microstructure.

**ANNEXE 2 :**

**Détermination de la distribution des masses moléculaires des polybutadiènes obtenus par la technique de chromatographie d'exclusion par la taille (SEC).**

a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.
Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

b) Préparation du polymère:

Il n'y a pas de traitement particulier de l'échantillon de polymère avant analyse. Celui-ci est simplement solubilisé dans du tétrahydrofurane à une concentration d'environ 1 g/l.

c) Analyse SEC:

Cas c1) L'appareillage utilisé est un chromatographe « WATERS alliance ». Le solvant d'élution est le tétrahydrofurane, le débit de 1 ml/min., la température du système de 35° C et la durée d'analyse de 90 min. On utilise un jeu de deux colonnes de dénomination commerciale « STYRAGEL HT6E ».
Le volume injecté de la solution de l'échantillon de polymère est 100 μl. Le système de détection est un réfractomètre différentiel « WATERS 2140 », un viscosimètre Waters et un détecteur UV (320 nm). Le logiciel d'exploitation des données chromatographiques est le système « WATERS MILLENIUM ».
Cas c2) L'appareillage utilisé est un chromatographe « WATERS, modèle 150C ». Le solvant d'élution est le tétrahydrofurane, le débit de 0,7 ml/mn, la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».
Le volume injecté de la solution de l'échantillon de polymère est 100 μl. Le détecteur est un réfractomètre différentiel « WATERS modèle RI32X » et le logiciel d'exploitation des données chromatographiques est le système « WATERS MILLENIUM » (version 3.00).

**ANNEXE 3 :**

**Détermination de la viscosité inhérente à 25° C d'une solution de polymère à 0,1 g/dl dans le toluène, à partir d'une solution de polymère sec**

PRINCIPE :

La viscosité inhérente est déterminée par la mesure du temps d'écoulement t de la solution de polymère et du temps d'écoulement $t_o$ du toluène, dans un tube capillaire.
La méthode se décompose en 3 grandes étapes:

→ *étape n°1 :* préparation de la solution de mesure à 0,1 g/dl dans le toluène ;
→ *étape n°2 :* mesure des temps d'écoulement t de la solution de polymère et $t_o$ du toluène à 25° C dans un tube « Ubbelohde » ;
→ *étape n°3 :* calcul de la viscosité inhérente.

*ETAPE N°1 - Préparation de la solution de mesure à partir du polymère sec :*

Dans une bouteille de 250 ml lavée et étuvée à 140° C au minimum 10 heures, on introduit 0,1 g de polymère sec (utilisation d'une balance de précision d'échelon e = 0,1 mg) et 100 ml de toluène de pureté supérieure à 99,5 %.

On place la bouteille sur un dispositif d'agitation à secousses pendant 90 min. (voire plus si le polymère n'est pas solubilisé).

*ETAPE N°2 - Mesure des temps d'écoulement $t_o$ du toluène et t de la solution de polymère à 25° C :*

1. Matériel:

- 1 cuve avec un bain thermostaté à 25° C $\pm$ 0,1° C pourvu d'un système de refroidissement à l'eau courante. La cuve est remplie par ¼ d'eau courante et ¾ d'eau déminéralisée.
- 1 thermomètre à alcool de type « PROLABO », placé dans le bain thermostaté avec une incertitude de $\pm$ 0,1 °C
- 1 tube viscosimétrique « Ubbelohde » destiné à être placé en position verticale dans le bain thermostaté.

*Caractéristiques des tubes utilisés:*

- diamètre du capillaire: 0,46 mm ;
- capacité: 18 à 22 ml.

2. Mesure du temps d'écoulement $t_o$ du toluène :

- rincer le tube par lavages au toluène ;
- introduire la quantité de toluène (pureté supérieure à 99,5 %) nécessaire à la mesure ;
- vérifier que le bain thermostaté est à 25° C ;
- déterminer le temps d'écoulement $t_0$.

3. Mesure du temps d'écoulement de la solution de polymère t

- rincer le tube par lavages à la solution de polymère ;
- introduire la quantité de solution de polymère nécessaire à la mesure ;
- vérifier que le bain thermostaté est à 25° C.
- déterminer le temps d'écoulement t.

*ETAPE N°3 - Calcul de la viscosité inhérente:*

La viscosité inhérente est obtenue par la relation suivante :

$$\eta_{inh} = \frac{1}{C} \ln\left[\frac{(t)}{(t_o)}\right]$$

avec

**C :**     concentration de la solution toluénique de polymère en g/dl ;

**t :**     temps d'écoulement de la solution toluénique de polymère en secondes ;

**$t_o$ :**     temps d'écoulement du toluène en secondes ;

$\eta_{Inh}$ **:**     viscosité inhérente exprimée en dl/g.

**Revendications**

1. Procédé de préparation d'un élastomère diénique fonctionnalisé présentant un taux d'enchaînements cis-1,4 supérieur à 90 % et un indice de polydispersité inférieur à 2,5, tel qu'un homopolymère ou un copolymère du butadiène, comprenant une réaction en continu ou en discontinu d'un système catalytique avec au moins un monomère diène conjugué à polymériser puis l'ajout d'un agent de fonctionnalisation au polymère ainsi obtenu pour l'obtention dudit élastomère fonctionnalisé, ledit système catalytique étant à base d'au moins :

   - optionnellement un diène conjugué de préformation,
   - un sel d'un ou plusieurs métaux de terre rare, tel qu'un sel d'un acide carboxylique ou d'un acide phosphorique organique,
   - un solvant hydrocarboné inerte,
   - un agent d'alkylation spécifique constitué par le produit de réaction d'un dérivé allylique du lithium avec un dérivé halogénure de dialkylaluminium, ledit agent étant un dérivé allylique de l'aluminium de formule $R''_nAlR'_{3-n}$, où R' est un groupe alcoyle saturé ou non ou bien un hydrure, où R'' est un groupe allylique et où n est un entier inclusivement compris entre 1 et 3, et
   - un donneur d'halogène qui appartient à la famille des halogénures d'alkylaluminium, à l'exclusion des sesquihalogénures d'alkylaluminium,

   **caractérisé en ce qu'**il comprend :

   - l'incorporation d'au moins une base de Lewis choisie dans le groupe constitué par un éther et un composé aminé : :

      (i) soit, antérieurement à ladite réaction, audit système catalytique lors de sa synthèse,
      (ii) soit, lors de ladite réaction, audit milieu de polymérisation comprenant ledit système catalytique et le(s) dit(s) monomère(s) à polymériser.

2. Procédé selon la revendication 1, **caractérisé en ce que** ledit composé aminé est un composé diaminé, qui est utilisé selon un rapport molaire (base de Lewis / sel de terre(s) rare(s)) allant de 2 à 8.

3. Procédé selon la revendication 1, **caractérisé en ce que** l'éther est le diéthyl éther ou le tétrahydrofuranne, qui est utilisé selon un rapport molaire (base de Lewis / sel de terre(s) rare(s) allant de 2 à 8.

4. Procédé selon une des revendications précédentes, **caractérisé en ce que** ledit dérivé allylique de l'aluminium est le produit de réaction d'un dérivé alylique du lithium de formule R''Li et d'un agent halogénant de formule $X_nAlR'_{3-n}$, où X est un halogène et où R', R'' et n sont tels que définis ci-dessus.

5. Procédé selon la revendication 4, **caractérisé en ce que** ledit donneur d'halogène correspond audit agent halogénant de formule $X_nAlR'_{3-n}$ utilisé en excès, lequel a réagi en partie seulement avec ledit dérivé allylique du lithium pour l'obtention dudit dérivé allylique de l'aluminium.

6. Procédé selon une des revendications 4 ou 5, **caractérisé en ce que** ledit agent halogénant est à base de brome, ledit système catalytique étant alors préformé antérieurement à ladite réaction de polymérisation.

7. Procédé selon la revendication 5 ou 6, **caractérisé en ce que**, comme défini dans le cas (i), il comprend l'incorporation de ladite base de Lewis à un pré-mélange comprenant ledit solvant hydrocarboné inerte, ledit dérivé allylique du lithium et ledit agent halogénant, puis un ajout dudit sel de terre rare à ce pré-mélange pour la synthèse dudit système catalytique.

8. Procédé selon la revendication 5 ou 6, **caractérisé en ce que**, comme défini dans le cas (i), il comprend l'incorporation de ladite base de Lewis au dudit sel de terre rare, qui est destiné à être ajouté à un pré-mélange comprenant ledit solvant hydrocarboné inerte, ledit dérivé allylique du lithium et ledit agent halogénant, pour la synthèse dudit système catalytique.

9. Procédé selon la revendication 5 ou 6, **caractérisé en ce que**, comme défini dans le cas (ii), il comprend l'incorporation de ladite base de Lewis directement au milieu de polymérisation comprenant ledit système catalytique et le(s)dit(s) monomère(s) à polymériser.

**10.** Procédé selon la revendication 8, **caractérisé en ce que** l'on prépare ledit système catalytique en réalisant un pré-mélange comprenant ledit solvant hydrocarboné inerte, ledit dérivé allylique du lithium et ledit agent halogénant, puis un ajout dudit sel de terre rare à ce pré-mélange.

**11.** Procédé selon une des revendications 4 à 6, **caractérisé en ce que** ledit agent halogénant est à base de chlore, ledit système catalytique étant alors formé *in situ* dans le milieu de polymérisation comprenant le(s)dit(s) monomère (s), et **en ce que** l'on incorpore ladite base de Lewis directement au milieu de polymérisation, comme défini dans le cas (ii).

**12.** Procédé selon une des revendications précédentes, **caractérisé en ce que** le rapport molaire (agent d'alkylation / sel de terre(s) rare(s)) dans ledit système catalytique présente une valeur allant de 1 à 20.

**13.** Procédé selon l'une des revendications précédentes, **caractérisé en ce qu'**on ajoute en décalé par rapport au système catalytique utilisé pour la réaction de polymérisation, en continu ou en discontinu, du ou des monomère (s) à polymériser, une quantité supplémentaire prédéterminée d'au moins un composé alkylaluminium de formules $AlR_3$ ou $HAlR_2$ ou $R''_nAlR'_{3-n}$, dans lesquelles R et R' représentent un groupe alcoyle saturé ou non, préférentiellement de un à douze atomes de carbone, R" représente un groupe allylique, n un entier inclusivement de 1 à 3 et H représente un atome d'hydrogène, dans le réacteur de polymérisation lorsqu'on opère en discontinu ou dans l'unité industrielle de polymérisation lorsqu'elle fonctionne en continu.

**14.** Procédé selon la revendication 13, **caractérisé en ce que** la quantité dudit composé alkylaluminium préalablement mis en présence avec le(s)dit(s) monomère(s) à polymériser varie de 10 à 5000 micromoles pour 100 g de monomère diène conjugué à polymériser, en fonction de la quantité d'impuretés présentes dans le milieu de polymérisation, telles que des impuretés provenant de solvants de recyclage.

**15.** Procédé selon une des revendications précédentes, **caractérisé en ce que** l'on met en oeuvre ladite réaction de polymérisation en continu, ledit composé alkylaluminium étant mis en présence avec le(s)dit(s) monomère(s) à polymériser en une entrée de ligne située en amont d'au moins un réacteur de polymérisation.

**Patentansprüche**

**1.** Verfahren zur Herstellung eines funktionalisierten Dienelastomers mit einem Gehalt an cis-1,4-Verknüpfungen von mehr als 90% und einem Polydispersitätsindex von weniger als 2,5, wie eines Butadien-Homopolymers oder -Copolymers, bei dem man ein katalytisches System kontinuierlich oder diskontinuierlich mit mindestens einem zu polymerisierenden konjugierten Dienmonomer umsetzt und dann zu dem so erhaltenen Polymer ein Funktionalisierungsmittel gibt, um das funktionalisierte Elastomer zu erhalten, wobei das katalytische System mindestens basiert auf:

- gegebenenfalls einem konjugierten Dien der Vorbildung,
- einem Salz eines oder mehrerer Seltenerdmetalle, wie einem Salz einer Carbonsäure oder organischen Phosphorsäure,
- einem inerten Kohlenwasserstofflösungsmittel,
- einem speziellen Alkylierungsmittel, das aus dem Reaktionsprodukt eines Lithiumallylderivats mit einem Dialkylaluminiumhalogenidderivat besteht, wobei es sich bei dem Mittel um ein Aluminiumallylderivat der Formel $R''_nAlR'_{3-n}$ handelt, wobei R' für eine gesättigte oder ungesättigte Alkylgruppe oder auch ein Hydrid steht und R" für eine Allylgruppe steht und n für eine ganze Zahl zwischen 1 und 3 inklusive steht, und
- einem Halogendonor aus der Familie der Alkylaluminiumhalogenide mit Ausnahme der Alkylaluminiumsesquihalogenide,

**dadurch gekennzeichnet, dass** man:

- mindestens eine Lewis-Base aus der Gruppe bestehend aus einem Ether und einer Aminverbindung

(i) entweder vor der Umsetzung in das katalytische System während dessen Synthese
(ii) oder während der Umsetzung in das Polymerisationsmedium, das das katalytische System und das zu polymerisierende Monomer bzw. die zu polymerisierenden Monomere umfasst, einarbeitet.

2. Verfahren nach Anspruch 1, **dadurch gekennzeichnet, dass** es sich bei der Aminverbindung um eine Diaminverbindung handelt, die in einem Molverhältnis von Lewis-Base zu Seltenerdmetallsalz(en) im Bereich von 2 bis 8 verwendet wird.

3. Verfahren nach Anspruch 1, **dadurch gekennzeichnet, dass** es sich bei dem Ether um Diethylether oder Tetrahydrofuran handelt, der in einem Molverhältnis von Lewis-Base zu Seltenerdmetallsalz(en) im Bereich von 2 bis 8 verwendet wird.

4. Verfahren nach einem der vorhergehenden Ansprüche, **dadurch gekennzeichnet, dass** es sich bei dem Aluminiumallylderivat um das Reaktionsprodukt eines Lithiumallylderivats der Formel R''Li und eines Halogenierungsmittels der Formel $X_nAlR'_{3-n}$ handelt, wobei X für ein Halogen steht und R', R'' und n wie oben definiert sind.

5. Verfahren nach Anspruch 4, **dadurch gekennzeichnet, dass** der Halogendonor dem im Überschuss verwendeten Halogenierungsmittel der Formel $X_nAlR'_{3-n}$ entspricht, welches nur zum Teil mit dem Lithiumallylderivat zu dem Aluminiumallylderivat reagiert hat.

6. Verfahren nach einem der Ansprüche 4 oder 5, **dadurch gekennzeichnet, dass** das Halogenierungsmittel auf Brom basiert, wobei das katalytische System dann vor der Polymerisationsreaktion vorgebildet wird.

7. Verfahren nach Anspruch 5 oder 6, **dadurch gekennzeichnet, dass** man, wie in Fall (i) definiert, die Lewis-Base in eine Vormischung, die das inerte Kohlenwasserstofflösungsmittel, das Lithiumallylderivat und das Halogenierungsmittel umfasst, einarbeitet und dann zur Synthese des katalytischen Systems das Seltenerdmetallsalz zu dieser Vormischung gibt.

8. Verfahren nach Anspruch 5 oder 6, **dadurch gekennzeichnet, dass** man, wie in Fall (i) definiert, die Lewis-Base in das Seltenerdmetallsalz einarbeitet, welches zur Zugabe zu einer Vormischung, die das inerte Kohlenwasserstofflösungsmittel, das Lithiumallylderivat und das Halogenierungsmittel umfasst, zur Synthese des katalytischen Systems bestimmt ist.

9. Verfahren nach Anspruch 5 oder 6, **dadurch gekennzeichnet, dass** man, wie in Fall (ii) definiert, die Lewis-Base direkt in das Polymerisationsmedium, das das katalytische System und das zu polymerisierende Monomer bzw. die zu polymerisierenden Monomere umfasst, einarbeitet.

10. Verfahren nach Anspruch 8, **dadurch gekennzeichnet, dass** man das katalytische System herstellt, indem man eine Vormischung, die das inerte Kohlenwasserstofflösungsmittel, das Lithiumallylderivat und das Halogenierungsmittel umfasst, herstellt und dann das Seltenerdmetallsalz zu dieser Vormischung gibt.

11. Verfahren nach einem der Ansprüche 4 bis 6, **dadurch gekennzeichnet, dass** das Halogenierungsmittel auf Chlor basiert, wobei das katalytische System dann in situ in dem Polymerisationsmedium, das das zu polymerisierende Monomer bzw. die zu polymerisierenden Monomere umfasst, gebildet wird und die Lewis-Base direkt in das Polymerisationsmedium eingearbeitet wird, wie in Fall (ii) definiert.

12. Verfahren nach einem der vorhergehenden Ansprüche, **dadurch gekennzeichnet, dass** das Molverhältnis von Alkylierungsmittel zu Seltenerdmetallsalz(en) in dem katalytischen System einen Wert im Bereich von 1 bis 20 aufweist.

13. Verfahren nach einem der vorhergehenden Ansprüche, **dadurch gekennzeichnet, dass** man gegenüber dem für die kontinuierliche oder diskontinuierliche Polymerisationsreaktion des zu polymerisierenden Monomers bzw. der zu polymerisierenden Monomere verwendeten katalytischen System zeitversetzt eine vorbestimmte zusätzliche Menge mindestens einer Alkylaluminiumverbindung der Formeln $AlR_3$ oder $HAlR_2$ oder $R''_nAlR'_{3-n}$, worin R und R' für eine gesättigte oder ungesättigte Alkylgruppe, vorzugsweise mit einem bis zwölf Kohlenstoffatomen, stehen, R'' für eine Allylgruppe steht, n für eine ganze Zahl von 1 bis 3 inklusive steht und H für ein Wasserstoffatom steht, bei diskontinuierlicher Fahrweise in den Polymerisationsreaktor bzw. bei kontinuierlicher Fahrweise in die technische Polymerisationsanlage gibt.

14. Verfahren nach Anspruch 13, **dadurch gekennzeichnet, dass** die Menge der vorher mit dem zu polymerisierenden Monomer bzw. den zu polymerisierenden Monomeren zusammengebrachten Alkylaluminiumverbindung in Abhängigkeit von der Menge der in dem Polymerisationsmedium vorliegenden Verunreinigungen, wie aus rezyklierten Lösungsmitteln stammenden Verunreinigungen, von 10 bis 5000 Mikromol auf 100 g zu polymerisierendes konjugiertes Dienmonomer variiert.

15. Verfahren nach einem der vorhergehenden Ansprüche, **dadurch gekennzeichnet, dass** man die Polymerisationsreaktion kontinuierlich durchführt, wobei man die Alkylaluminiumverbindung in einem vor dem mindestens einen Polymerisationsreaktor gelegenen Leitungseinlass mit dem zu polymerisierenden Monomer bzw. den zu polymerisierenden Monomeren zusammenbringt.

## Claims

1. Process for the preparation of a functionalized diene elastomer exhibiting a content of cis-1,4-enchainments of greater than 90% and a polydispersity index of less than 2.5, such as a butadiene homopolymer or copolymer, comprising a continuous or non-continuous reaction of a catalytic system with at least one conjugated diene monomer to be polymerized and then the addition of a functionalization agent to the polymer thus obtained in order to obtain the said functionalized elastomer, the said catalytic system being based on at least:

   - optionally, a preformation conjugated diene,
   - a salt of one or more rare earth metals, such as a salt of an organic carboxylic acid or of an organic phosphoric acid,
   - an inert hydrocarbon solvent,
   - a specific alkylating agent consisting of the reaction product of an allyllithium derivative with a dialkylaluminium halide derivative, the said agent being an aluminium allyl derivative of formula $R''_nAlR'_{3-n}$, where R' is a saturated or unsaturated alkyl group or else a halide, where R'' is an allyl group and where n is an integer between 1 and 3 inclusive, and
   - a halogen donor which belongs to the family of the alkylaluminium halides, with the exception of the alkylaluminium sesquihalides,

   **characterized in that** it comprises:

   - the incorporation of at least one Lewis base chosen from the group consisting of an ether and an amine compound:

      (i) either, prior to the said reaction, in the said catalytic system during the synthesis thereof,
      (ii) or, during the said reaction, in the said polymerization medium comprising the said catalytic system and the said monomer(s) to be polymerized.

2. Process according to Claim 1, **characterized in that** the said amine compound is a diamine compound which is used in a Lewis base/rare earth metal salt molar ratio ranging from 2 to 8.

3. Process according to Claim 1, **characterized in that** the ether is diethyl ether or tetrahydrofuran which is used according to a Lewis base/rare earth metal salt molar ratio ranging from 2 to 8.

4. Process according to one of the preceding claims, **characterized in that** the said aluminium allyl derivative is the reaction product of an allyllithium derivative of formula R''Li and of a halogenating agent of formula $X_nAlR'_{3-n}$, where X is a halogen and where R', R'' and n are as defined above.

5. Process according to Claim 4, **characterized in that** the said halogen donor corresponds to the said halogenating agent of formula $X_nAlR'_{3-n}$ used in excess, which has in part reacted only with the said allyllithium derivative in order to obtain the said aluminium allyl derivative.

6. Process according to either of Claims 4 and 5, **characterized in that** the said halogenating agent is based on bromine, the said catalytic system then being preformed prior to the said polymerization reaction.

7. Process according to Claim 5 or 6, **characterized in that**, as defined in the case (i), it comprises the incorporation of the said Lewis base in a premix comprising the said inert hydrocarbon solvent, the said allyllithium derivative and the said halogenating agent and then an addition of the said rare earth metal salt to this premix for the synthesis of the said catalytic system.

8. Process according to Claim 5 or 6, **characterized in that**, as defined in the case (i), it comprises the incorporation of the said Lewis base in the said rare earth metal salt, which is intended to be added to a premix comprising the said inert hydrocarbon solvent, the said allyllithium derivative and the said halogenating agent for the synthesis of the said catalytic system.

9. Process according to Claim 5 or 6, **characterized in that**, as defined in the case (ii), it comprises the incorporation of the said Lewis base directly in the polymerization medium comprising the said catalytic system and the said monomer(s) to be polymerized.

10. Process according to Claim 8, **characterized in that** the said catalytic system is prepared by producing a premix comprising the said inert hydrocarbon solvent, the said allyllithium derivative and the said halogenating agent, followed by an addition of the said rare earth metal salt to this premix.

11. Process according to one of Claims 4 to 6, **characterized in that** the said halogenating agent is based on chlorine, the said catalytic system then being formed in situ in the polymerization medium comprising the said monomer(s), and **in that** the said Lewis base is incorporated directly in the polymerization medium, as defined in the case (ii).

12. Process according to one of the preceding claims, **characterized in that** the alkylating agent/rare earth metal salt molar ratio in the said catalytic system exhibits a value ranging from 1 to 20.

13. Process according to one of the preceding claims, **characterized in that** an additional predetermined amount of at least one alkylaluminium compound of formula $AlR_3$ or $HAlR_2$ or $R''_nAlR'_{3-n}$, in which R and R' represent a saturated or unsaturated alkoyl group, preferably of one to twelve carbon atoms, R" represents an allyl group, n represents an integer from 1 to 3 inclusive and H represents a hydrogen atom, is added, offset in time with respect to the catalytic system used for the reaction for the polymerization, continuously or non-continuously, of the monomer or monomers to be polymerized, to the polymerization reactor, when a non-continuous operation is carried out, or to the industrial polymerization unit, when the unit operates continuously.

14. Process according to Claim 13, **characterized in that** the amount of the said alkylaluminium compound brought together beforehand with the said monomer(s) to be polymerized varies from 10 to 5000 micromol per 100 g of conjugated diene monomer to be polymerized, as a function of the amount of impurities present in the polymerization medium, such as impurities originating from recycled solvents.

15. Process according to one of the preceding claims, **characterized in that** the said polymerization reaction is carried out continuously, the said alkylaluminium compound being brought together with the said monomer(s) to be polymerized in a line inlet located upstream of at least one polymerization reactor.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0238636 A
- WO 03097708 A
- EP 919573 A1
- EP 1845118 A1
- FR 2740778 A
- EP 1050545 B
- WO 0064910 A
- WO 2006133757 A1
- WO 2007045417 A

**Littérature non-brevet citée dans la description**

- **P. GELADI ; B. R. KOWALSKI.** Partial Least Squares regression : a tutorial. *Analytica Chimica Acta,* 1986, vol. 185, 1-17
- **M. TENENHAUS.** La régression PLS - Théorie et pratique. 1998